# EUROPEAN PATENT SPECIFICATION

(11) **EP 3 076 131 B1**
(45) Date of publication and mention of the grant of the patent: **16.12.2020**
(21) Application number: 16159410.6
(22) Date of filing: 09.03.2016
(51) Int. Cl.: G01C 21/34, G01C 21/36, G01G 19/08

(54) **NAVIGATION METHOD AND DEVICE**
NAVIGATIONSVERFAHREN UND VORRICHTUNG
PROCÉDÉ ET DISPOSITIF DE NAVIGATION

(30) Priority: 30.03.2015 CN 201510145113
(43) Date of publication of application: 05.10.2016
(73) Proprietor: Xiaomi Inc., Beijing 100085 (CN)
(72) Inventor: TANG, Mingyong, Beijing 100085 (CN); LIU, Huayijun, Beijing 100085 (CN); CHEN, Tao, Beijing 100085 (CN)
(74) Representative: Cabinet Beau de Loménie

(56) References cited:
- EP-A1- 0 218 466
- JP-A- H 112 535
- JP-A- 2004 093 212
- JP-A- 2006 281 836
- US-A- 5 913 917
- US-A1- 2009 080 703
- US-A1- 2012 296 515
- US-A1- 2013 261 966
- US-A1- 2014 278 041
- US-A1- 2014 303 886
- US-A1- 2015 019 165

## Description

### FIELD

The present disclosure relates to navigation technology, and more particularly to a navigation method and a navigation device.

### BACKGROUND

Currently, vehicle navigations are realized mostly according to the GPS (Global Positioning System). The GPS has the advantages of precise positioning and strong versatility. However, in the actual driving process, the positioning and navigation relying only on GPS may no longer satisfy the driving demand of users.

Document US 2014/303886 A1 discloses a device for installation in a utility vehicle for warning or consideration of a utility-vehicle-relevant driving restriction.

Document US 2015/019165 A1 discloses a system including a set of tire pressure sensors for tires of a vehicle, a control module and user interface.

### SUMMARY

The invention is defined in the appended set of claims.

In order to solve problems in the related art, the present disclosure provides a navigation method and a navigation device.

According to an embodiment of a first aspect of the present disclosure, a navigation method is provided, and the method comprises: obtaining status information of tires of a vehicle; obtaining road condition information in real time; and performing a route navigation for the vehicle according to the status information, the road condition information and a preset navigation strategy.

The status information of the tires of the vehicle comprises tire pressure information; and the road condition information comprises weather information, a maximum load on a drive route and a maximum height on the drive route.

According to this first aspect, performing said route navigation for the vehicle according to the status information, the road condition information and a preset navigation strategy comprises: computing a current load of the vehicle according to the tire pressure information; judging whether the current load of the vehicle exceeds a maximum load on the drive route; and if the current load of the vehicle exceeds the maximum load on the drive route, sending an alarm to a user and reorganizing a safe route.

According to this first aspect, performing said route navigation for the vehicle according to the status information, the road condition information and a preset navigation strategy comprises: judging according to the tire pressure information whether a current tire pressure reaches a preset alert threshold; and if the current tire pressure reaches the preset alert threshold, and it is determined according to the weather information that a slippery road is on the drive route, sending an alarm to a user, and reorganizing a safe route.

In a particular embodiment, the status information also comprises shape change information. Performing said route navigation for the vehicle according to the status information, the road condition information and a preset navigation strategy thus comprises: computing a current height of the vehicle according to the shape change information and the tire pressure information; judging whether the current height of the vehicle exceeds a maximum height on the drive route; and if the current height of the vehicle exceeds the maximum height of the drive route, sending an alarm to a user and reorganizing a safe route.

In an embodiment, the navigation method further comprises: judging whether the current load of the vehicle exceeds a maximum load of the vehicle; and if the current load of the vehicle exceeds the maximum load of the vehicle, determining that the vehicle is overloaded and sending an alarm to the user.

According to embodiments of a second aspect of the present disclosure, a navigation device is provided, and the navigation device comprises: a first obtaining module, configured to obtain status information of tires of a vehicle; a second obtaining module, configured to obtain road condition information in real time; and a navigation module, configured to perform a route navigation for the vehicle according to the status information, the road condition information and a preset navigation strategy.

The status information of the tires of the vehicle comprises tire pressure information; and the road condition information comprises weather information, a maximum load on a drive route and a maximum height on the drive route.

According to this second aspect, the navigation module comprises: a first computing sub-module, configured to compute a current load of the vehicle according to the tire pressure information; a first judging sub-module, configured to judge whether the current load of the vehicle exceeds a maximum load on the drive route; and a first organizing sub-module, configured to send an alarm to a user and reorganize a safe route if the current load of the vehicle exceeds the maximum load on the drive route.

According to this second aspect, the navigation module comprises: a third judging sub-module, configured to judge according to the tire pressure information whether a current tire pressure reaches a preset alert threshold; and a third organizing sub-module, configured to send an alarm to a user and recognize a safe router if the current tire pressure of the vehicle reaches the preset alert threshold, and it is determined according to the weather information that a slippery road is on the organized drive route.

In a particular embodiment, the navigation module also comprises: a second computing sub-module, configured to compute a current height of the vehicle according to the shape change information and the tire pressure information; a second judging sub-module, configured to judge whether the current real height of the vehicle exceeds a maximum height on the drive route; and a second organizing sub-module, configured to send an alarm to a user and reorganize a safe route if the current height of the vehicle exceeds the maximum height on the drive route.

In an embodiment, the navigation module further comprises: a fourth judging sub-module, configured to judge whether the current load of the vehicle exceeds a maximum load of the vehicle; and an output sub-module, configured to determine that the vehicle is overloaded and send an alarm to the user if the current load of the vehicle exceeds the maximum load of the vehicle.

According to embodiments of a third aspect of the present disclosure, a navigation device is provided, and the navigation device comprises: a processor; and a memory configured to store instructions executable by the processor, in which the processor is configured to: obtain status information of tires of a vehicle; obtain road condition information in real time; and perform a route navigation for the vehicle according to the status information, the road condition information and a preset navigation strategy.

A computer program is provided according to a fourth aspect of the invention. The computer program performs the steps of a navigation method as defined above when this program is executed by a computer (e.g. by at least one processor of a navigation device).

This program can use any programming language and take the form of source code, object code or a code intermediate between source code and object code, such as a partially compiled form, or any other desirable form.

The invention is also directed to a computer-readable information medium containing instructions of the computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

The information medium can also be an integrated circuit in which the program is incorporated, the circuit being adapted to execute the method in question or to be used in its execution.

The technical solutions provided in the present disclosure may comprise the following beneficial effects.

In above embodiments of the present disclosure, a new navigation design is proposed, which obtains status information of the tires of the vehicle and real-time road condition information, and then performs the route navigation for the vehicle according to the status information, the road condition information and the preset navigation strategy. In this way, the navigation may be performed according to the status of the tires of the vehicle and the real-time road condition during driving, which does not only enrich existing navigation systems, but also enable users to adapt to more complicated drive environment.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow char of a navigation method according to an example embodiment;
Fig. 2 is a flow chart of another navigation method according to an example embodiment;
Fig. 3 is a block diagram of a navigation device according to an example;
Fig. 4 is a block diagram of another navigation device according to an example;
Fig. 5 is a block diagram of another navigation device according to an example;
Fig. 6 is a block diagram of another navigation device according to an example;
Fig.7 is a block diagram of another navigation device according to an example; and
Fig. 8 is a schematic diagram of a navigation device according to an example embodiment.

### DETAILED DESCRIPTION

Example embodiments will be described in detail herein, and examples thereof are illustrated in accompanying drawings. Throughout figures referred by the following description, the same reference number in different figures indicates the same or similar elements unless otherwise stated. Implementations described in the following example embodiments do not represent all the implementations consistent with the present disclosure. Instead, they are only examples of the device and method consistent with some aspects of the present disclosure detailed in the appended claims. Terms in the present disclosure are only used to describe specific embodiments, and do not intend to limit the present disclosure. The singular forms such as "a", "an" and "the" in the present disclosure and the appended claims also intend to comprise plural forms, unless otherwise specified in the context. It should also be understood that, the term "and/or" used herein refers to and comprises any or all possible combinations of one or more listed items associated with each other.

It should be appreciated that, although terms such as first, second and third are used in the present disclosure for describing various information, the information are not limited to these terms. These terms are only used to distinguish the same type of information. For example, without departing from the scope of the present disclosure, the first information may also be referred to as the second information, and similarly, the second information may be referred to as the first information. Depending on the context, the word "if" used herein may be interpreted as "when ..." or "upon ..." or "in response to determining ..."

In the related art, the vehicle navigation is mainly realized based on GPS. The GPS navigation system usually plans a optimal drive route with shorter distance or with unobstructed traffic for a user, however, the actual drive environment is complicated variable, and the GPS navigation system does not consider some external factors that may affect the drive safety of users when planning routes, sometimes the planned drive route may not be the optimal route in the complicated drive environment.

To this end, a new navigation design is proposed in the present disclosure, which obtains status information of the tires of the vehicle and real-time road condition information, and then performs the route navigation for the vehicle according to the status information, the road condition information and the preset navigation strategy. In this way, the navigation may be performed according to the status of the tires of the vehicle and the real-time road condition during driving, which does not only enrich existing navigation systems, but also enable users to adapt to more complicated drive environment.

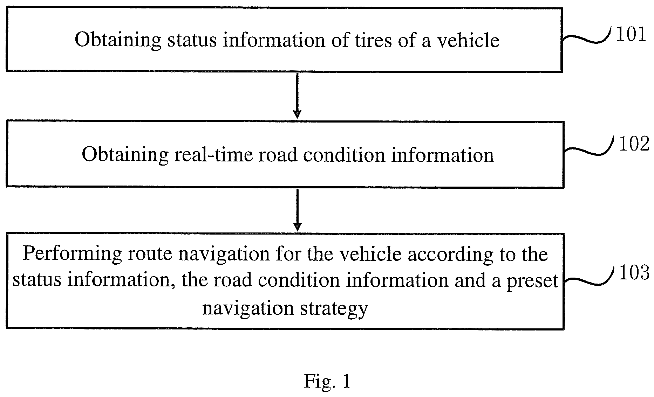

Fig. 1 is a flow chart of a navigation method according to an example embodiment, the navigation method being performed by a terminal, and as shown in Fig. 1, the navigation method comprises following steps.

In step 101, status information of tires of a vehicle is obtained.

In step 102, road condition information is obtained in real time.

The execution order of step 101 and step 102 may be exchanged.

In step 103, a route navigation is performed for the vehicle according to the status information, the road condition information and a preset navigation strategy (or preset navigation rule).

In the present disclosure, the terminal may be a handheld terminal; for example, the handheld terminal may be a user's smart phone or a specific handheld navigation device; of course, except for the handheld terminal, the terminal may also be an in-vehicle terminal; for example, the terminal may be a specific in-vehicle navigation device or a navigation module in an in-vehicle system. The vehicle may be a traditional vehicle, an electric vehicle or a hybrid vehicle.

In actual driving, once the user chooses a destination, the terminal may locate the current location of the vehicle via the GPS, and set the current location as a starting point, and then plan an optimal drive route for the user after analyzing in the map database or GPS database pre-loaded locally. However, the drive route is planned based only on GPS, which does not consider some external factors that may affect the drive safety, and thus the planned drive route may not be the optimal route in the complicated drive environment.

For example, assume a road section with limited height is on the drive route planned by the GPS navigation system, and the current height of the vehicle has exceeded the limited height. Then, if the GPS navigation system does not consider the actual height of the vehicle when planning the drive route, the user may be in danger when driving to the road section with limited height according to drive route planned by the GPS navigation system. For another example, assume that a slippery road is on the drive route planned by the GPS navigation system, and the current tire pressure of the vehicle is too high, which may cause a slip while driving on the slippery road, then the user may be in danger when driving to the slippery road according to the drive road planned by the GPS navigation system.

In order to ensure the drive route planned for the user to be safer and more reliable, in the present embodiment, while planning the drive route for users, the terminal refers to the status information of tires of the vehicle and real-time road condition information based on the GPS navigation, and takes the status information of tires of the vehicle and real-time road condition information as important factors in route planning, thus improving the reliability of the drive route planned for users.

In the present embodiment, the status information of the tires of the vehicle comprises tire pressure information and possibly also shape change information, in which the shape change information may be the height change information or volume change information of the tires of the vehicle, etc. The road condition information comprises at least weather information and a maximum load on a drive route, and possibly also a maximum height on the drive route, in which the maximum load on the drive route and the maximum height on the drive route may be obtained after analyzing and screening road sections on the drive road according to the maximum load or the maximum height on each road section. For example, in order to ensure passing without causing danger, the maximum loads and possibly also the maximum heights on all sections of the drive route are analyzed, and the minimum value of the maximum loads and the maximum heights are regarded as the maximum load and the maximum height on the drive road.

While planning a drive route for a user, the terminal first obtains the shape change information and tire pressure information of the tires of the vehicle as well as real-time road condition information, in which the shape change information of the tires of the vehicle may be collected via cameras preset on the vehicle at fixed locations. For example, one camera may be fixed on each tire of the vehicle, and the camera may record shape pictures of the tire according to a certain period, and then save the recorded pictures in a preset memory device. When obtaining the shape change information of the tires of the vehicle, the terminal may read the pictures from the memory device, and obtain the information such as the height difference change or the volume change by comparing the pictures. The tire pressure information of the tires of the vehicle may be collected by a preset specific tire pressure measurement device, and after collecting, the collected data may be saved to the preset memory device or manually input to the preset memory device by the user, and thus the terminal may read the data directly from the memory device when obtaining the tire pressure information. The real-time road condition information such as the weather information, the maximum load on the drive route and the maximum height on the drive route may be collected through a third-party public service platform or may be manually input to the third-party service platform by traffic administration staff, and thus the terminal may establish a connection with the third-party public service platform and synchronize data from the third-party public service platform in real time, when obtaining the real-time road condition information.

After obtaining the shape change information and the tire pressure information of the tires of the vehicle as well as the real-time road condition information, the terminal may perform a route navigation according to the obtained information and a preset navigation strategy, and plan a safe drive route for the user. The preset navigation strategy may be configured by the user according to the actual drive environment, and in different drive environments, different navigation strategies may be configured respectively.

In the present embodiment, the navigation strategy is as follows. After planning the drive route for the user, the navigation system obtains the maximum load on the drive route, such as the maximum loads of bridges and road surfaces on each section of the drive route, and then computes the current load of the vehicle according to the tire pressure information and possibly also according to the shape change information, and determines whether the current load of the vehicle exceeds the maximum load on the drive route. If the current load of the vehicle exceeds the maximum load on the drive route, the drive route is determined as a dangerous road, and in this case, an alarm is sent to the user, and a safe route is reorganized, thus avoiding the dangerous road.

After computing the current load of the vehicle according to the tire pressure information and possibly also according to the shape change information, the terminal may also judge whether the current load of the vehicle exceeds the maximum load of the vehicle, in which the maximum load of the vehicle may be obtained through obtaining the type of the vehicle, and searching according to the type; and the type of the vehicle may be obtained through image recognition by the preset camera, or obtained through identifying the in-vehicle chip and reading the type information carried in the in-vehicle chip. Once the current load of the vehicle is judged as exceeding the maximum load of the vehicle, the vehicle may be determined as overloaded, and once the vehicle is determined as overloaded, an alarm may be sent to the user, the traffic administration may be notified automatically, or the vehicle may be locked automatically to forbid starting.

In the present embodiment, the navigation strategy may also be as follows. After planning the drive route for the user, the navigation system obtains the maximum height on the drive route, and then computes the current height of the vehicle according to the shape change information or the tire pressure information, and judges whether the current height of the vehicle exceeds the maximum height on the drive route. If the current height exceeds the maximum height on the drive route, the drive route may be determined as a dangerous road, and in this case, an alarm may be sent to the user, and a safe route may be reorganized, thus avoiding the dangerous road.

It should be noted that in the process of computing the current load an possibly also the current height of the vehicle according to the tire pressure information and possibly also according to the shape change information, the data modeling may be performed according to preset algorithm based on the load data, the tire pressure data and the shape change data of the tires of the vehicle, such that a data model representing the relationship between the load of the vehicle and the tire pressure data or the shape change data may be achieved, and a data model representing the relationship between the height of the vehicle and the tire pressure data or the shape change data may also be achieved. Then, according to above data models, the obtained tire pressure data or shape change may be transferred to specific load data or height data of the vehicle. The detailed implementation of establishing the data models will not be described in detail in the present disclosure, and those skilled in the art may refer to introductions in the related art.

In the present embodiment, besides comparing the current load (and possibly also the current height) of the vehicle with the maximum load (and the maximum height) on the drive route to determine whether the current drive route is a dangerous road, the navigation strategy is set in combination with the weather information. For example, in actual driving, if the tire pressure of a user's vehicle is too high, and if a slippery road is on the drive route, a slip may be caused when driving to the slippery road, and thus the navigation strategy may be as follows. The navigation system obtains the weather information after planning the drive road for the user, and judges whether there is a slippery road on the drive route according to the weather information. For example, the navigation system may judge whether it will rain or snow in the region where the drive route passes, and if yes, the navigation system determines that a slippery road is on the drive route. Further, if it is determined that a slippery road is on the drive route, it is further judged if the current tire pressure reaches a preset alert threshold, and if yes, the vehicle may slip on the slippery road. Therefore, the current drive route is determined as a dangerous road if the current tire pressure reaches the preset alert threshold, and in this case, an alarm is sent to the user, and a safe route is reorganized to avoid the dangerous road.

Of course, in practice, the specific contents of an exemplary navigation strategy are not limited to the above contents, and other navigation strategies may be set by users according to the drive environments. For example, a tire wear degree may be obtained, and a distance along which the vehicle may drive safely may be determined according to the tire wear degree. If the tire wear degree is high, and the distance along which the vehicle may drive safely is less than the distance to destination on the drive route, an alarm may be sent to the user, and a closer route to the destination may be reorganized or a drive route to the nearest maintenance station may be organized, which will not described in detail in the present embodiment.

In the above embodiments, a new navigation design is proposed, which obtains status information of the tires of the vehicle and real-time road condition information, and then performs the route navigation for the vehicle according to the status information, the road condition information and a preset navigation strategy (or present navigation rule). In this way, the navigation may be performed according to the status of the tires of the vehicle and the real-time road condition during driving, which does not only enrich existing navigation systems, but also enable users to adapt to more complicated drive environment.

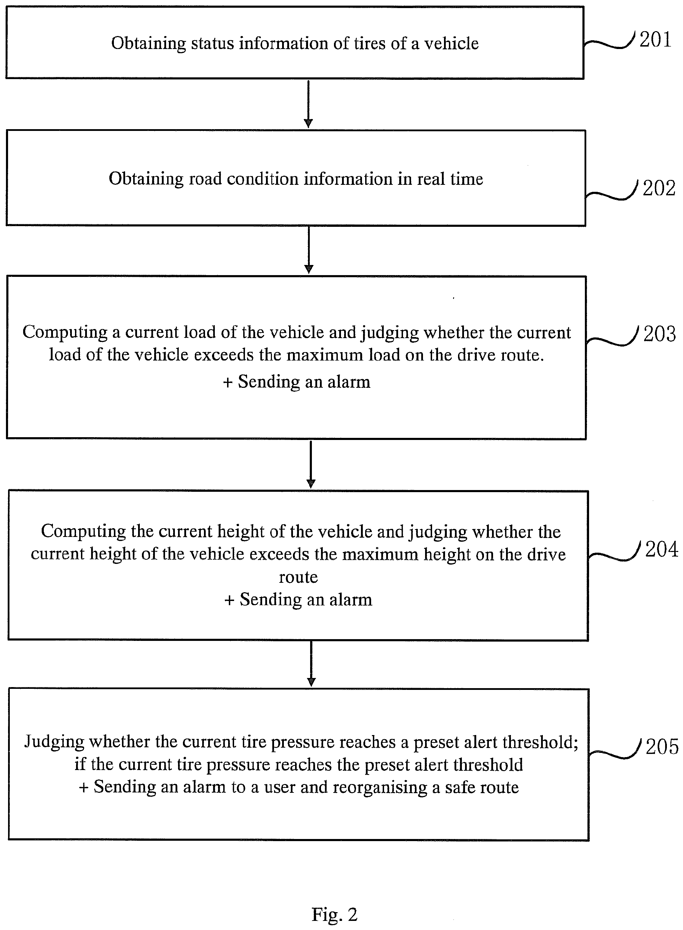

Fig. 2 is a flow chart of another navigation method according to an example embodiment, which is applied in a terminal. As shown in Fig. 2, the navigation method comprises following steps.

In step 201, status information of tires of a vehicle is obtained, in which the status information of the tires of the vehicle comprises tire pressure information, and possibly also shape change information, of the tires of the vehicle.

In step 202, road condition information is obtained in real time, in which the road condition information comprises weather information, a maximum load on a drive route and a maximum height on the drive route.

In step 203, a current load of the vehicle is computed according to the tire pressure information and possibly also according to the shape change information, and it is judged whether the current load of the vehicle exceeds the maximum load on the drive route. If the current load of the vehicle exceeds the maximum load on the drive route, an alarm is sent to a user and a safe route is reorganized.

In step 204, a current height of the vehicle is computed according to the shape change information or the tire pressure information, and it is judged whether the current height of the vehicle exceeds the maximum height on the drive route. If the current height of the vehicle exceeds the maximum height on the drive route, an alarm is sent to a user and a safe route is reorganized.

In step 205, it is judged according to the tire pressure information whether the current tire pressure reaches a preset alert threshold. If the current tire pressure reaches the preset alert threshold, and it is determined according to the weather information that a slippery road is on the drive route, an alarm is sent to a user, and a safe route is reorganized.

The execution order of step 201 and step 202 may be exchanged, and the execution order of steps 203, 204 and 205 may be exchanged.

In the present embodiment, the terminal may be a handheld terminal; for example, the handheld terminal may be a user's smart phone or a specific handheld navigation device; of course, except for the handheld terminal, the terminal may also be an in-vehicle terminal; for example, the terminal may be a specific in-vehicle navigation device or a navigation module in an in-vehicle system. The vehicle may be a traditional vehicle, an electric vehicle or a hybrid vehicle.

In actual driving, once the user chooses a destination, the terminal may locate the current location of the vehicle via the GPS, and set the current location as a starting point, and then plan an optimal drive route for the user after analyzing in the map database or GPS database pre-loaded locally. However, the drive route is planned based on GPS, which does not consider some external factors that may affect the drive safety, and thus the planned drive route may not be the optimal route in the complicated drive environment.

For example, assume a road section with limited height is on the drive route planned by the GPS navigation system, and the current height of the vehicle has exceeded the limited height. Then, if the GPS navigation system does not consider the actual height of the vehicle when planning the drive route, the user may be in danger when driving to the road section with limited height according to the drive route planned by the GPS navigation system. For another example, assume that a slippery road is on the drive route planned by the GPS navigation system, and the current tire pressure of the vehicle is too high, which may cause a slip while driving on the slippery road, then the user may be in danger when driving to the slippery road according to the drive route planned by the GPS navigation system.

In order to ensure the drive route planned for the user to be safer and more reliable, in the present embodiment, while planning the drive route for users, the terminal refers to the status information of tires of the vehicle and real-time road condition information based on the GPS navigation, and takes the status information of tires of the vehicle and real-time road condition information as important factors in route planning, thus improving the reliability of the drive route planned for users.

In the present embodiment, the status information of the tires of the vehicle comprises tire pressure information and may also comprise shape change information, in which the shape change information may be the height change information or volume change information of the tires of the vehicle, etc. The road condition information comprises at least weather information and a maximum load on a drive route, and possibly also a maximum height on the drive route, in which the maximum load on the drive route or the maximum height on the drive route may be obtained after analyzing and screening road sections on the drive road according to the maximum load or the maximum height on each section of the drive route. For example, in order to ensure passing without causing danger, the maximum loads or the maximum heights on all sections of the drive route may be analyzed, and the minimum value of the maximum loads or the maximum heights is regarded as the maximum load or the maximum height on the drive road.

While planning a drive route for a user, the terminal first obtains the shape change information and tire pressure information of the tires of the vehicle as well as real-time road condition information, in which the shape change information may be collected via cameras preset on the vehicle at fixed locations. For example, one camera may be fixed on each tire of the vehicle, and the camera may record shape pictures of the tire according to a certain period, and then save the recorded pictures in a preset memory device. When obtaining the shape change information of the tires of the vehicle, the terminal may read the pictures from the memory device, and obtain the information such as the height difference change or the volume change by comparing the pictures. The tire pressure information may be collected by a preset specific tire pressure measurement device, and after collecting, the collected data may be saved to the preset memory device or manually input to the preset memory device by the user, and thus the terminal may read the data directly from the memory device when obtaining the tire pressure information. The real-time road condition information like the weather information, the maximum load on the drive route and the maximum height on the drive route may be collected through the third-party public service platform or may be manually input to the third-party service platform by traffic administration staff, and thus the terminal may establish a connection with the third-party public service platform and synchronize data from the third-party public service platform in real time, when obtaining the real-time road condition information.

After obtaining the shape change information, the tire pressure information, and real-time road condition information, the terminal may perform the route navigation according to the obtained information and a preset navigation strategy, and plan a safe drive route for the user. The preset navigation strategy may be configured by the user according to the actual drive environment, and in different drive environments, different navigation strategies may be configured respectively.

In the present embodiment, the navigation strategy may be as follows. After planning the drive route for the user, the navigation system obtains the maximum load on the drive route, such as the maximum loads of bridges and road surfaces on each section of the drive route, and then computes the current load of the vehicle according to the shape change information or the tire pressure information, and judges whether the current load of the vehicle exceeds the maximum load on the drive route. If the current load exceeds the maximum load on the drive route, the drive route is determined as a dangerous road, and in this case, an alarm is sent to the user, and a safe route is reorganized to avoid the dangerous road.

After computing the current load of the vehicle according to the shape change information or the tire pressure information, the terminal may also judge whether the current load of the vehicle exceeds the maximum load of the vehicle, in which the maximum load of the vehicle may be obtained through obtaining the type of the vehicle, and searching according to the type; and the type of the vehicle may be obtained through image recognition by the preset camera, or obtained through identifying the in-vehicle chip and reading the type information carried in the in-vehicle chip. Once the current load of the vehicle is judged as exceeding the maximum load of the vehicle, the vehicle may be determined as overloaded, and once the vehicle is determined as overloaded, an alarm may be sent to the user, the traffic administration may be notified automatically or the vehicle may be locked automatically to forbid starting.

In the present embodiment, the navigation strategy may also be as follows. The navigation system obtains the maximum height on the drive route after planning the drive route for the user, and then computes the current height of the vehicle according to the shape change information or the tire pressure information, and judges whether the current height of the vehicle exceeds the maximum height on the drive route. If the current height of the vehicle exceeds the maximum height on the drive route, the drive route may be determined as a dangerous road, and in this case, an alarm may be sent to the user, and a safe route may be reorganized to avoid the dangerous road.

It should be noted that in the process of computing the current load or current height of the vehicle according to the shape change information or the tire pressure information, the data modeling may be performed according to preset algorithm based on the load data, the tire pressure data and the shape change data of the tires of the vehicle, such that a data model representing the relationship between the load of the vehicle and the tire pressure data or the shape change data may be achieved, and a data model representing the relationship between the height of the vehicle and the tire pressure data or the shape change data may also be achieved. Then, according to the above data models, the obtained tire pressure data or shape change may be transferred to specific load data or height data of the vehicle. The detailed implementation of establishing the data models will not be described in detail in the present disclosure, and those skilled in the art may refer to introductions in the related art.

Besides comparing the current load (and possibly also the current height) of the vehicle with the maximum load (and the maximum height) on the drive route to determine whether the current drive route is a dangerous road, the navigation strategy is also set in combination with the weather information. For example, in actual driving, if the tire pressure of a user's vehicle is too high, and if a slippery road is on the drive route, a slip may be caused when driving to the slippery road, and thus the navigation strategy may be as follows. The navigation system obtains the weather information after planning the drive route for the user and judges whether there is a slippery road on the drive route according to the weather information. For example, the navigation system may judge whether it will rain or snow in the region where the drive route passes, and if yes, the navigation system determines that a slippery road is on the drive route. Further, if it is determined that a slippery road is on the drive route, it is further judged if the current tire pressure reaches a preset alert threshold, and if yes, the vehicle may slip on the slippery road. Therefore, the current drive route is determined as a dangerous road if the current tire pressure reaches the preset alert threshold, and in this case, an alarm is sent to the user, and a safe route is reorganized to avoid the dangerous road.

Of course, in practice, the specific contents of an exemplary navigation strategy are not limited to the above contents, and other navigation strategies may be set by users according to the drive environments. For example, a tire wear degree may be obtained, and a distance along which the vehicle may drive safely may be determined according to the tire wear degree. If the tire wear degree is high, and the distance along which the vehicle may drive safely is less than the distance to destination on the drive route, an alarm may be sent to the user, and a closer route to the destination may be reorganized or a drive route to the nearest maintenance station may be organized, which will not described in detail in the present embodiment.

In the above embodiments, a new navigation design is proposed, which obtains status information of the tires of the vehicle and real-time road condition information, and then performs the route navigation for the vehicle according to the status information, the road condition information and a preset navigation strategy (or present navigation rule). In this way, the navigation may be performed according to the status of the tires of the vehicle and the real-time road condition during driving, which does not only enrich existing navigation systems, but also enable users to adapt to more complicated drive environment.

Corresponding to the described navigation method embodiments, the present disclosure also provides a navigation device.

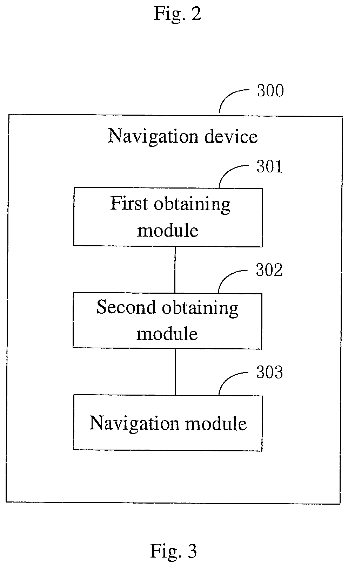

Fig. 3 is a block diagram of a navigation device (or navigation terminal) according to an example.

As shown in Fig. 3, the navigation device 300 according to an example comprises a first obtaining module 301, a second obtaining module 302 and a navigation module 303.

The first obtaining module 301 is configured to obtain status information of tires of a vehicle.

The second obtaining module 302 is configured to obtain road condition information in real time.

The navigation module 303 is configured to perform a route navigation for the vehicle according to the status information, the road condition information and a preset navigation strategy.

In the present example, the status information of the tires of the vehicle comprises tire pressure information and may also comprise shape change information; and the road condition information comprises at least weather information and a maximum load on a drive route, and possibly also a maximum height on the drive route.

In the above example, a new navigation design is proposed, which obtains status information of the tires of the vehicle and real-time road condition information, and then performs the route navigation for the vehicle according to the status information, the road condition information and the preset navigation strategy. In this way, the navigation may be performed according to the status of the tires of the vehicle and the real-time road condition during driving, which does not only enrich existing navigation systems, but also enable users to adapt to more complicated drive environment.

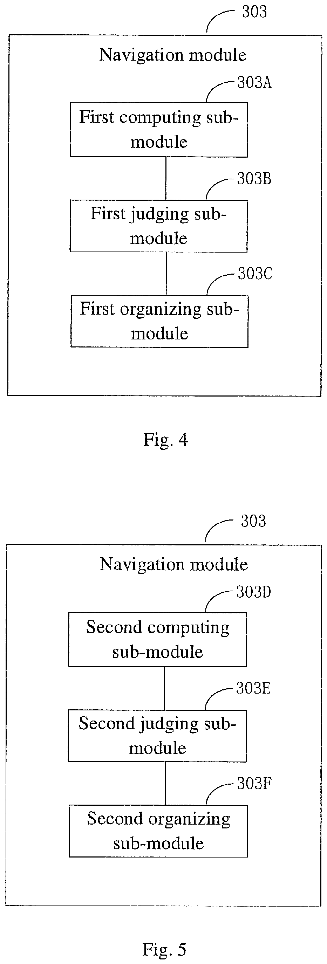

Referring to Fig. 4, which is a block diagram of another navigation device according to an example, the navigation module 303 comprises a first computing sub-module 303A, a first judging sub-module 303B, and a first organizing sub-module 303C, based on the example shown in Fig. 3.

The first computing sub-module 303A is configured to compute a current load of the vehicle according to the tire pressure information and possibly also according to the shape change information.

The first judging sub-module 303B is configured to judge whether the current load of the vehicle exceeds the maximum load on the drive route.

The first organizing sub-module 303C is configured to send an alarm to a user and reorganize a safe route if the current load of the vehicle exceeds the maximum load on the drive route.

Referring to Fig. 5, which is a block diagram of another navigation device according to the example example, the navigation module 303 may comprise a second computing sub-module 303D, a second judging sub-module 303E, and a second organizing sub-module 303F, based on the embodiment shown in Fig. 3.

The second computing sub-module 303D is configured to compute a current height of the vehicle according to the shape change information or the tire pressure information.

The second judging sub-module 303E is configured to judge whether the current height of the vehicle exceeds the maximum height on the drive route.

The second organizing sub-module 303F is configured to send an alarm to a user and reorganize a safe route if the current height of the vehicle exceeds the maximum height on the drive route.

It should be noted that, the second computing sub-module 303D, the second judging sub-module 303E, and the second organizing sub-module 303F indicated in the device example shown in Fig. 5 may also be contained in the device example shown in Fig. 4, which will not be limited in the present disclosure.

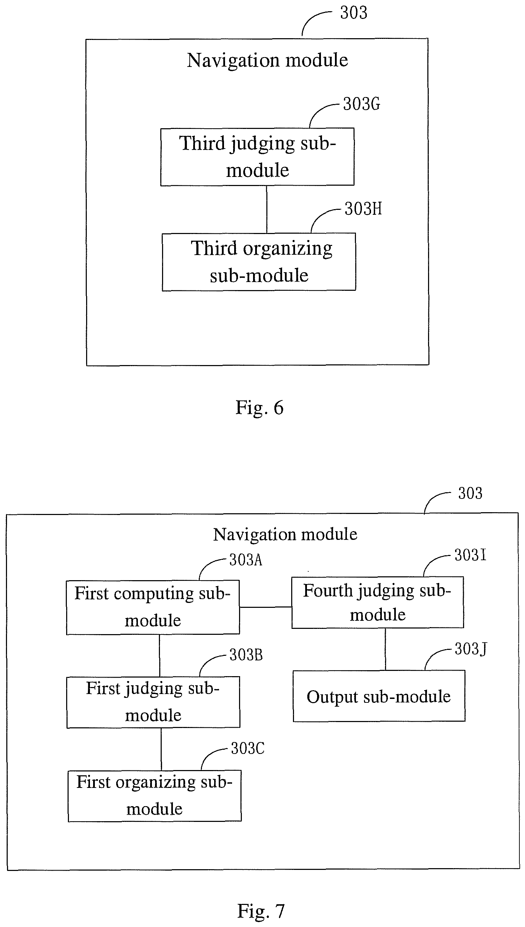

Referring to Fig. 6, which is a block diagram of another navigation device according to an example, the navigation module 303 may comprise a third judging sub-module 303G and a third organizing sub-module 303H, based on the example shown in Fig.3.

The third judging sub-module 303G is configured to judge according to the tire pressure information whether the current tire pressure reaches a preset alert threshold.

The third organizing sub-module 303H is configured to send an alarm to a user and reorganize a safe route if the current tire pressure of the vehicle reaches the preset alert threshold, and it is determined according to the weather information that a slippery road is on the organized drive route.

It should be noted that, the third judging sub-module 303G and the third organizing sub-module 303H indicated in the device example shown in Fig. 6 may also be contained in the device example shown in Figs. 4-5, which will not be limited in the present disclosure.

Referring to Fig. 7, which is a block diagram of another navigation device according to an example, the navigation module 303 may comprise a fourth judging sub-module 3031 and an output sub-module 303J, based on the example shown in Fig. 4.

The fourth judging sub-module 3031 is configured to judge whether the current load of the vehicle exceeds the maximum load of the vehicle.

The output sub-module 303J is configured to determine the vehicle is overloaded and send an alarm to the user if the current load of the vehicle exceeds the maximum load of the vehicle.

It should be noted that, the fourth judging sub-module 3031 and the output sub-module 303J indicated in the device example shown in Fig. 6 may also be contained in the device example shown in Fig. 3 or Figs. 5-6, which will not be limited in the present disclosure.

With respect to the devices in the above examples, the specific operation modes of individual modules therein have been described in detail in the examples regarding the methods for displaying the WIFI list, which will not be elaborated herein.

Since the device embodiments are substantially corresponding to the method embodiments, the related aspects may be referred to the description in the method embodiments. The device embodiments described above are only exemplary, and modules illustrated as separate components therein may be or may not be physically separated from each other, and components represented as modules may be or may not be physical modules, i.e., may be located in a same place or may be distributed in multiple network units. Some or all of the modules may be selected according to the actual requirements so as to achieve objectives of the present disclosure, which may be understood or implemented by those skilled in the art without creative work.

Accordingly, a navigation device is also provided in the present disclosure, and the navigation device comprises a processor and a memory configured to store instructions executable by the processor. The processor is configured to obtain status information of tires of a vehicle; obtain real-time road condition information; and perform a route navigation for the vehicle according to the status information, the road condition information and a preset navigation strategy.

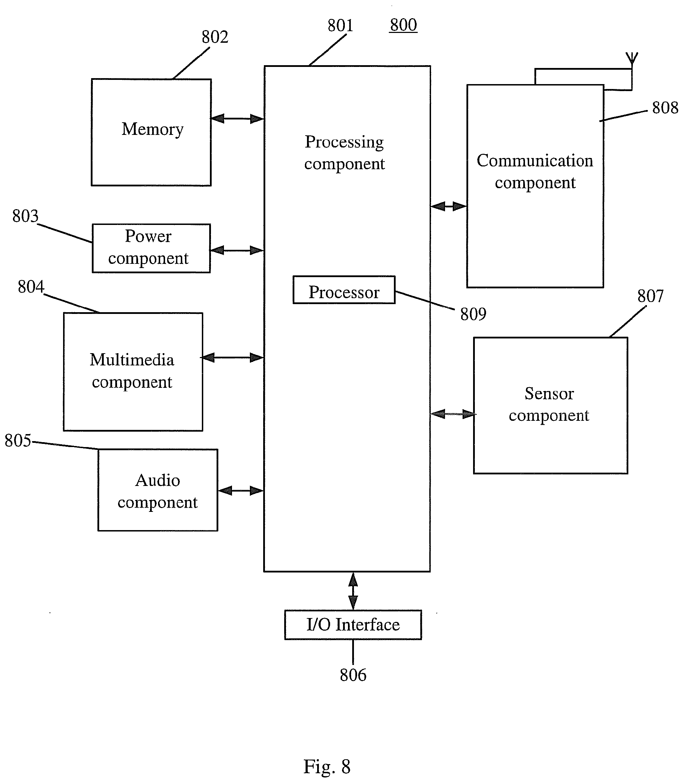

Fig. 8 is a schematic diagram illustrating a navigation device according to an example embodiment.

As shown in Fig. 8, the navigation device (or navigation terminal) 800 according to an example embodiment may be a mobile phone, a navigation equipment, a computer, an in-vehicle computer, a digital broadcasting terminal, a messaging device, a game console, a tablet device, a medical device, an exercise equipment, and a personal digital assistant, etc.

Referring to Fig. 8, the navigation device 800 may comprise one or more of following components: a processing component 801, a memory 802, a power component 803, a multimedia component 804, an audio component 805, an input/output (I/O) interface 806, a sensor component 807, and a communication component 808.

The processing component 801 typically controls overall operations of the device 800, such as the operations associated with display, telephone calls, data communications, camera operations, and recording operations. The processing component 801 may comprise one or more processors 809 to execute instructions to perform all or part of the steps in the above described methods. Moreover, the processing component 801 may comprise one or more modules which facilitate the interaction between the processing component 801 and other components. For instance, the processing component 801 may comprise a multimedia module to facilitate the interaction between the multimedia component 804 and the processing component 801.

The memory 802 is configured to store various types of data to support the operation of the device 800. Examples of such data comprise instructions for any applications or methods operated on the device 1400, contact data, phonebook data, messages, pictures, video, etc. The memory 802 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 803 provides power to various components of the device 800. The power component 803 may comprise a power management system, one or more power sources, and any other components associated with the generation, management, and distribution of power in the device 800.

The multimedia component 804 comprises a screen providing an output interface between the device 800 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 804 comprises a front camera and/or a rear camera. The front camera and the rear camera may receive external multimedia data while the device 800 is in an operation mode, such as a photographing mode or a video mode. Each of the front camera and the rear camera may be a fixed optical lens system or have focus and optical zoom capability.

The audio component 805 is configured to output and/or input audio signals. For example, the audio component 805 comprises a microphone (MIC) configured to receive an external audio signal when the device 800 is in an operation mode, such as a call mode, a recording mode, and a voice recognition mode. The received audio signal may be further stored in the memory 802 or transmitted via the communication component 808. In some embodiments, the audio component 805 further comprises a speaker to output audio signals.

The I/O interface 806 provides an interface between the processing component 801 and peripheral interface modules, such as a keyboard, a click wheel, buttons, and the like. The buttons may comprise, but are not limited to, a home button, a volume button, a starting button, and a locking button.

The sensor component 807 comprises one or more sensors to provide status assessments of various aspects of the device 800. For instance, the sensor component 807 may detect an open/closed status of the device 800 and relative positioning of components (e.g., the display and the keypad of the device 800). The sensor component 807 may also detect a change in position of the device 800 or of a component in the device 800, a presence or absence of user contact with the device 800, an orientation or an acceleration/deceleration of the device 800, and a change in temperature of the device 800. The sensor component 807 may comprise a proximity sensor configured to detect the presence of nearby objects without any physical contact. The sensor component 807 may also comprise a light sensor, such as a CMOS or CCD image sensor, for use in imaging applications. In some embodiments, the sensor component 807 may also comprise an accelerometer sensor, a gyroscope sensor, a magnetic sensor, a pressure sensor, or a temperature sensor.

The communication component 808 is configured to facilitate wired or wireless communication between the device 800 and other devices. The device 800 can access a wireless network based on a communication standard, such as WIFI, 2G, or 3G, or a combination thereof. In one example embodiment, the communication component 808 receives a broadcast signal or broadcast associated information from an external broadcast management system via a broadcast channel. In one example embodiment, the communication component 808 further comprises a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium comprising instructions, such as the memory 802 comprising instructions. The above instructions are executable by the processor 809 in the device 800, for performing the above-described methods. For example, the non-transitory computer-readable storage medium may be a ROM, a RAM, a CD-ROM, a magnetic tape, a floppy disc, an optical data storage device, and the like.

When the instructions in the storage medium are executed by the processor of the mobile terminal, the mobile terminal can implement a navigation method, comprising: obtaining status information of tires of a vehicle; obtaining road condition information in real time; and performing a route navigation for the vehicle according to the status information, the road condition information and a preset navigation strategy.

Other embodiments of the invention will be clear to those skilled in the art within the scope of the following claims.

## Claims

1. A navigation method performed by a terminal, comprising:
obtaining (101) status information of tires of a vehicle, wherein the status information of the tires of the vehicle comprises tire pressure information;
obtaining (102) road condition information in real time, wherein the road condition information comprises a maximum load on a drive route and weather information; and
performing (103) a route navigation for the vehicle according to the status information, the road condition information and a preset navigation strategy,
wherein performing said route navigation for the vehicle comprises:
computing a current load of the vehicle according to the tire pressure information;
judging whether the current load of the vehicle exceeds a maximum load on the drive route; and
if the current load of the vehicle exceeds the maximum load on the drive route, sending an alarm to a user and reorganizing a route to avoid the drive route,
wherein performing said route navigation for the vehicle further comprises:
judging according to the tire pressure information whether a current tire pressure reaches a preset alert threshold; and
if the current tire pressure reaches the preset alert threshold, and it is determined according to the weather information that a slippery road is on the drive route, sending an alarm to the user and reorganizing a route to avoid the drive route.

2. The navigation method according to claim 1, further comprising:
judging whether the current load of the vehicle exceeds a maximum load of the vehicle; and
if the current load of the vehicle exceeds the maximum load of the vehicle, determining that the vehicle is overloaded and sending an alarm to the user.

3. A navigation device (300), comprising:
a first obtaining module (301), configured to obtain status information of tires of a vehicle, wherein the status information of the tires of the vehicle comprises tire pressure information;
a second obtaining module (302), configured to obtain road condition information in real time, wherein the road condition information comprises a maximum load on a drive route and weather information; and
a navigation module (303), configured to perform a route navigation for the vehicle according to the status information, the road condition information and a preset navigation strategy,
wherein the navigation module (303) comprises:
a first computing sub-module (303A), configured to compute a current load of the vehicle according to the tire pressure information;
a first judging sub-module (303B), configured to judge whether the current load of the vehicle exceeds a maximum load on the drive route; and
a first organizing sub-module (303C), configured, if the current load of the vehicle exceeds the maximum load on the drive route, to send an alarm to a user and to reorganize a route to avoid the drive route,
wherein the navigation module (303) further comprises:
a third judging sub-module (303G), configured to judge according to the tire pressure information whether a current tire pressure reaches a preset alert threshold; and
a third organizing sub-module (303H) configured, if the current tire pressure reaches the preset alert threshold and it is determined according to the weather information that a slippery road is on the drive route, to send an alarm to the user and reorganize a route to avoid the drive route.

4. The navigation device (300) according to claim 3, wherein the navigation module (303) further comprises:
a second judging sub-module (3031), configured to judge whether the current load of the vehicle exceeds a maximum load of the vehicle; and
an output sub-module (303J), configured to determine that the vehicle is overloaded and send an alarm to the user if the current load of the vehicle exceeds the maximum load of the vehicle.

5. A computer program including instructions for executing the steps of a method according to claim 1 or 2.

6. A recording medium readable by a computer and having recorded thereon a computer program including instructions for executing the steps of a method according to claim 1 or 2.

## Patentansprüche

1. Von einem Endgerät ausgeführtes Navigationsverfahren, umfassend:
Erhalten (101) von Zustandsinformationen der Reifen eines Fahrzeugs, wobei die Zustandsinformationen der Reifen des Fahrzeugs Reifendruckinformationen umfassen,
Erhalten (102) von Straßenzustandsinformationen in Echtzeit, wobei die Straßenzustandsinformationen eine Maximallast auf einer Fahrtroute und Wetterinformationen umfassen, und
Ausführen (103) einer Routennavigation für das Fahrzeug gemäß den Statusinformationen, den Straßenzustandsinformationen und einer voreingestellten Navigationsstrategie,
wobei das Ausführen der Routennavigation für das Fahrzeug umfasst:
Berechnen einer aktuellen Last des Fahrzeugs anhand der Reifendruckinformationen,
Beurteilen, ob die aktuelle Last des Fahrzeugs eine Maximallast auf der Fahrtroute überschreitet, und
wenn die aktuelle Last des Fahrzeugs die Maximallast auf der Fahrtroute überschreitet, Senden eines Alarms an einen Benutzer und Neuorganisieren einer Route zur Umgehung der Fahrtroute,
wobei das Ausführen der Routennavigation für das Fahrzeug ferner umfasst:
Beurteilen anhand der Reifendruckinformationen, ob ein aktueller Reifendruck eine voreingestellte Alarmschwelle erreicht, und
wenn der aktuelle Reifendruck die voreingestellte Alarmschwelle erreicht und anhand der Wetterinformationen festgestellt wird, dass eine rutschige Straße auf der Fahrtroute liegt, Senden eines Alarm an den Benutzer und Neuorganisieren einer Route zur Umgehung der Fahrtroute.

2. Navigationsverfahren nach Anspruch 1, ferner umfassend:
Beurteilen, ob die aktuelle Last des Fahrzeugs eine Maximallast des Fahrzeugs überschreitet, und
wenn die aktuelle Last des Fahrzeugs die Maximallast des Fahrzeugs überschreitet, Feststellen, dass das Fahrzeug überladen ist, und Senden eines Alarms an den Benutzer.

3. Navigationsgerät (300), umfassend:
ein erstes Erhaltungsmodul (301), das dazu konfiguriert ist, Statusinformationen von Reifen eines Fahrzeugs zu erhalten, wobei die Statusinformationen der Reifen des Fahrzeugs Reifendruckinformationen umfassen,
ein zweites Erhaltungsmodul (302), das dazu konfiguriert ist, Straßenzustandsinformationen in Echtzeit zu erhalten, wobei die Straßenzustandsinformationen eine Maximallast auf einer Fahrtroute und Wetterinformationen umfassen, und
ein Navigationsmodul (303), das dazu konfiguriert ist, eine Routennavigation für das Fahrzeug gemäß den Statusinformationen, den Straßenzustandsinformationen und einer voreingestellten Navigationsstrategie durchzuführen,
wobei das Navigationsmodul (303) umfasst:
ein erstes Berechnungs-Untermodul (303A), das dazu konfiguriert ist, eine aktuelle Last des Fahrzeugs anhand der Reifendruckinformationen zu berechnen,
ein erstes Beurteilungs-Untermodul (303B), das dazu konfiguriert ist, zu beurteilen, ob die aktuelle Last des Fahrzeugs eine Maximallast auf der Fahrtroute überschreitet, und
ein erstes organisierendes Untermodul (303C), das dazu konfiguriert ist, einen Alarm an einen Benutzer zu senden, wenn die aktuelle Last des Fahrzeugs die Maximallast auf der Fahrtroute überschreitet, und eine Route neu zu organisieren, um die Fahrtroute zu umgehen,
wobei das Navigationsmodul (303) ferner umfasst:
ein drittes Beurteilungs-Untermodul (303G), das dazu konfiguriert ist, anhand der Reifendruckinformationen zu beurteilen, ob ein aktueller Reifendruck eine voreingestellte Alarmschwelle erreicht, und
ein drittes organisierendes Untermodul (303H), das dazu konfiguriert ist, wenn der aktuelle Reifendruck die voreingestellte Alarmschwelle erreicht und anhand der Wetterinformationen festgestellt wird, dass sich auf der Fahrtroute eine rutschige Straße befindet, einen Alarm an den Benutzer zu senden und eine Route neu zu organisieren, um die Fahrtroute zu umgehen.

4. Navigationsgerät (300) nach Anspruch 3, wobei das Navigationsmodul (303) ferner umfasst:
ein zweites Beurteilungs-Untermodul (303I), das dazu konfiguriert ist, zu beurteilen, ob die aktuelle Last des Fahrzeugs eine Maximallast des Fahrzeugs überschreitet, und
ein Ausgabe-Untermodul (303J), das dazu konfiguriert ist, festzustellen, dass das Fahrzeug überladen ist, und einen Alarm an den Benutzer zu senden, wenn die aktuelle Last des Fahrzeugs die Maximallast des Fahrzeugs überschreitet.

5. Computerprogramm mit Anweisungen zur Ausführung der Schritte eines Verfahrens nach Anspruch 1 oder 2.

6. Aufzeichnungsmedium, das von einem Computer lesbar ist und auf dem ein Computerprogramm aufgezeichnet ist, das Anweisungen zur Ausführung der Schritte eines Verfahrens nach Anspruch 1 oder 2 enthält.

## Revendications

1. Procédé de navigation mis en œuvre par un terminal, comprenant les étapes suivantes :
obtenir (101) des informations sur l'état des pneumatiques d'un véhicule, dans lequel les informations sur l'état des pneumatiques du véhicule comprennent des informations de pression des pneumatiques ;
obtenir (102) des informations sur les conditions de route en temps réel, dans lequel les informations sur les conditions de route comprennent une charge maximum sur un itinéraire de conduite et des informations météorologiques ; et
exécuter (103) une navigation routière pour le véhicule, en fonction des informations d'état, des informations sur les conditions de route et d'une stratégie de navigation prédéfinie,
dans lequel l'exécution de ladite navigation routière pour le véhicule comprend les étapes suivantes :
calculer une charge actuelle du véhicule en fonction des informations de pression des pneumatiques ;
évaluer si la charge actuelle du véhicule dépasse une charge maximum sur l'itinéraire de conduite ; et
si la charge actuelle du véhicule dépasse la charge maximum sur l'itinéraire de conduite, envoyer une alarme à un utilisateur et réorganiser un itinéraire pour éviter l'itinéraire de conduite,
dans lequel l'exécution de ladite navigation routière pour le véhicule comprend en outre les étapes suivantes :
évaluer, en fonction des informations de pression des pneumatiques, si une pression actuelle des pneumatiques atteint un seuil d'alerte prédéfini ; et
si la pression actuelle des pneumatiques atteint le seuil d'alerte prédéfini, et s'il est déterminé, en fonction des informations météorologiques qu'une route glissante se trouve sur l'itinéraire de conduite, envoyer une alarme à l'utilisateur et réorganiser un itinéraire pour éviter l'itinéraire de conduite.

2. Procédé de navigation selon la revendication 1, comprenant en outre les étapes suivantes :
évaluer si la charge actuelle du véhicule dépasse une charge maximum du véhicule ; et
si la charge actuelle du véhicule dépasse la charge maximum du véhicule, déterminer que le véhicule est en surcharge et envoyer une alarme à l'utilisateur.

3. Dispositif de navigation (300) comprenant :
un premier module d'obtention (301) configuré pour obtenir des informations sur l'état des pneumatiques d'un véhicule, dans lequel les informations sur l'état des pneumatiques du véhicule comprennent des informations de pression des pneumatiques ;
un second module d'obtention (302) configuré pour obtenir des informations sur des conditions de route en temps réel, dans lequel les informations sur les conditions de route comprennent une charge maximum sur un itinéraire de conduite et des informations météorologiques ; et
un module de navigation (303) configuré pour exécuter une navigation routière pour le véhicule, en fonction des informations d'état, des informations sur les conditions de route et d'une stratégie de navigation prédéfinie,
dans lequel le module de navigation (303) comprend :
un premier sous-module de calcul (303A) configuré pour calculer une charge actuelle du véhicule en fonction des informations de pression des pneumatiques ;
un premier sous-module d'évaluation (303B) configuré pour évaluer si la charge actuelle du véhicule dépasse une charge maximum sur l'itinéraire de conduite ; et
un premier sous-module d'organisation (303C) configuré pour envoyer, si la charge actuelle du véhicule dépasse la charge maximum sur l'itinéraire de conduite, une alarme à un utilisateur et pour réorganiser un itinéraire afin d'éviter l'itinéraire de conduite,
dans lequel le module de navigation (303) comprend en outre :
un troisième sous-module d'évaluation (303G) configuré pour évaluer, en fonction des informations de pression des pneumatiques, si une pression actuelle des pneumatiques atteint un seuil d'alerte prédéfini ; et
un troisième sous-module d'organisation (303H) configuré pour envoyer, si la pression actuelle des pneumatiques atteint le seuil d'alerte prédéfini, et s'il est déterminé, en fonction des informations météorologiques qu'une route glissante se trouve sur l'itinéraire de conduite, une alarme à l'utilisateur et pour réorganiser un itinéraire afin d'éviter l'itinéraire de conduite.

4. Dispositif de navigation (300) selon la revendication 3, dans lequel le module de navigation (303) comprend en outre :
un deuxième sous-module d'évaluation (303I) configuré pour évaluer si la charge actuelle du véhicule dépasse une charge maximum du véhicule ; et
un sous-module de sortie (303J) configuré pour déterminer que le véhicule est en surcharge et pour envoyer une alarme à l'utilisateur si la charge actuelle du véhicule dépasse la charge maximum du véhicule.

5. Programme informatique comportant des instructions destinées à exécuter les étapes d'un procédé selon la revendication 1 ou 2.

6. Support d'enregistrement lisible par un ordinateur et sur lequel est enregistré un programme informatique comportant des instructions destinées à exécuter les étapes d'un procédé selon la revendication 1 ou 2.
